# EUROPEAN PATENT APPLICATION

(11) **EP 1 069 671 A1**
(43) Date of publication of application: **17.01.2001**
(21) Application number: 99113396.8
(22) Date of filing: 11.07.1999
(51) Int. Cl.: H02K 49/10, F16H 49/00

(54) **Contactless magnetic gear train**

(71) Applicant: Segattini, Tiziano, 38066 Riva del Garda (TN) (IT)
(72) Inventor: Segattini, Tiziano, 38066 Riva del Garda (TN) (IT)
(74) Representative: Monti, Umberto

(57) **Abstract**

A magnetic gear train comprising two or more members (1, 1A, 2, 2A) rotatable about a corresponding axis (3, 3A, 4, 4A), each axis being equipped with a plurality of magnets (10, 10A; 20, 20A) circumferentially spaced along their periphery and projecting therefrom.

The magnetic axes of the permanent magnets (10, 10A, 20, 20A) are in planes perpendicular to the axes of rotation (3, 3A, 4, 4A), and are further inclined to the radial direction (R) of the corresponding rotatable member (1, 1A, 2, 2A).

## Description

The present invention relates to an improved magnetic gear train, i.e. a device for transmitting a rotation torque between two rotatable members without any mechanical contact between them.

The invention can be advantageously employed in many fields where a considerable torque has to be transmitted, such as for example - and only for exemplary purposes - in wind operated systems, in plants for manufacturing barrels for processing hides, for transferring a force from a body to another with a substantially null reduction thereof.

The advantages of using magnetic gear trains are a friction reduction, a much simpler manufacturing of the gears and a silent operation, and moreover such transmissions do not need lubricants or chains.

There are known several types of magnetic gear trains or magnetic transmissions.

US-A-5 569 967 discloses a structure of magnetic gear train, and more precisely a magnetic gear train comprising two rotatable members shaped like discs, each peripherally provided with a plurality of magnetic units or magnets with their magnetic axes parallel to the axis of rotation of the corresponding disc. The peripheral surfaces of the disc are smooth and - at the so-called mesh point - are separated by a small gap (alternatively the gears may contact one another) . Such an arrangement does not ensure the elimination of slippage due to an overload, and therefore is not suitable for many systems for transmitting motion.

US-A-2 243 555 discloses a magnetic gear train for a measuring instrument, comprising two discs with different diameters on the peripheries of which radially projecting permanent magnets are secured, such permanent magnets being arranged with their magnetic axes parallel to each other and parallel to the rotation axes of both discs. This arrangement is not adapted for transmitting a large power and moreover requires external compensating magnets for relieving the side thrusts acting onto the two discs.
Additional examples of magnetic gear trains are disclosed in US-A-5 861 692, US-A-5 329 196, US-A-5224 259 and EP-A-282 095.

The object of the present invention is to overcome the above discussed limitations of the prior art devices, and more particularly to provide an improved magnetic gear train that is capable of transmitting a relatively large power, is simple and cheap to be manufactured, and operates in a reliable manner.

These objects are accomplished through a magnetic gear train as claimed in claim 1. Further advantageous characteristics are recited in the dependent claims.

The invention will now be disclosed with reference to the attached drawings of preferred but non-limiting embodiments thereof, in which:
Fig. 1 schematically shows a presently preferred embodiment of the invention;
Fig. 2 is an enlarged top view of the gear train of Fig. 1;
Figures 3 and 4 are more detailed scrap views illustrating the magnets and their arrangement; and
Fig. 5 schematically illustrates a transmission according to the invention with gears shafts perpendicular to one another.

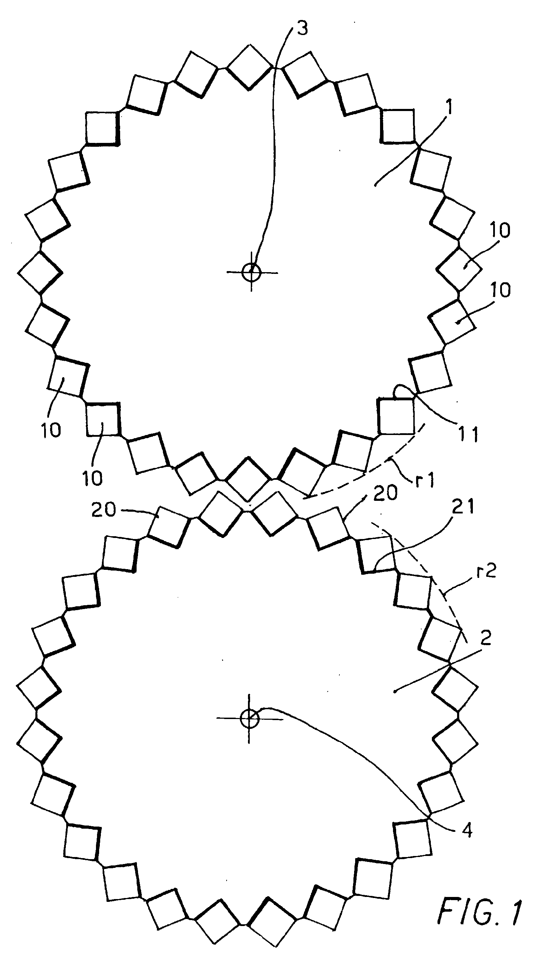

With reference to Fig. 1, a gear train according to the invention comprises a first member 1 rotatable about an axis 3 that can be driven by a motor (not shown), and a second member 2 rotatable about an axis 4 (substantially) parallel to the former and constituting the transmission driven member. In other embodiments a gear train according to the invention can comprise three or more rotatable members.

Preferably the two members 1, 2 are formed as metal discs of a material that is not magnetic, but can be magnetized, such as iron or steel, and the diameters of both discs are equal. However, in accordance with specific applications, they can be shaped like truncated cones and/or be of different diameters. The rotatable members can be supported on their axes or shaft by suitable bearings, e.g. by magnetic bearings or other suitable supporting members.

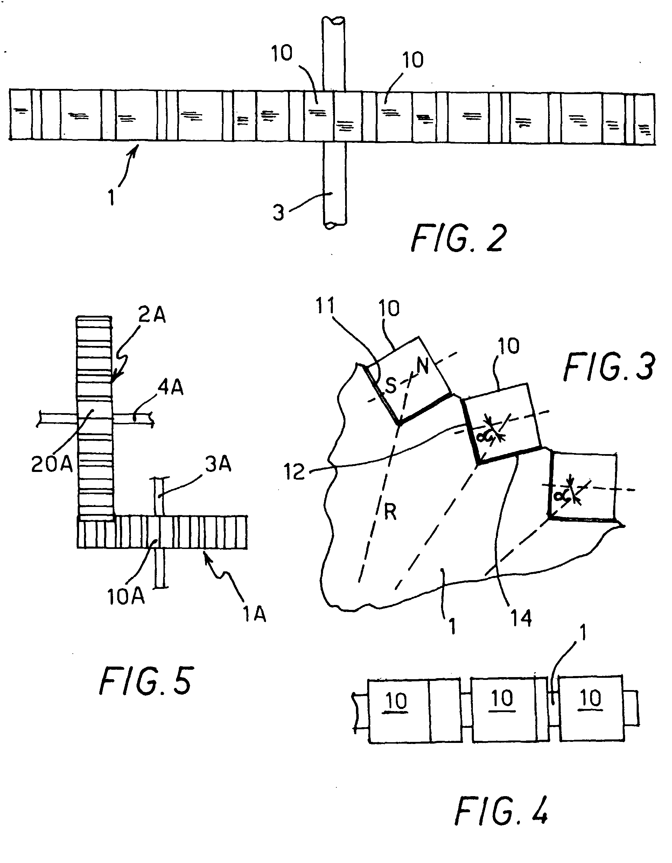

As better shown in Fig. 3, on the peripheral surface of rotatable member 1, hereinafter indicated as disc 1, there are formed recesses 11, equally spaced along the disc peripheral surface, and adapted to receive or house permanent magnets 10 that are firmly secured to the disc by glueing, by means of a forced joint, by means of flush-mounted screws, or other suitable means. Alternatively, the magnets can be secured, at least partially, thanks to their magnetic force.

Preferably, as better shown in Figures 2 and 3, each recess comprises two walls 12, 14 inclined (particularly perpendicular) to one another, and each magnet 10 is shaped as a parallelepiped or prismatic small block having the magnetic axis S-N parallel to two opposed faces. Each magnet 10 is fitted into the corresponding recess 11 in a tilted posture, so that its magnetic axis S-N substantially lies in a plane perpendicular to the rotation axis 3 of the disc, and is tilted or inclined with respect to the radial direction (i.e. the radius) R of the corresponding disc.

In the embodiment illustrated in Figures 2 and 3, the pole N is located outwardly of the disc 1, anyhow the magnet could also be arranged with the pole S disposed outwardly of the disc 1.

On the peripheral surface of rotatable member 2, hereinafter indicated as disc 2, there are formed recesses 21, equally spaced along the disc peripheral surface, and adapted to receive or house permanent magnets 20. Preferably, the magnets 20 and the recesses 21 are equal to magnets 10 and recesses 11 and are not further illustrated in detail.

As shown in the Figures, the magnetic axes of permanent magnets 10, 20 lie in a plane perpendicular to the axes of rotation 3 and 4 of discs 1 and 2, respectively, and are inclined by an angle α to the radial direction R of the corresponding disc. Preferably, the angle α formed by the magnetic axis S-N of each magnet with the radial direction is about 45 degrees.

The magnets are positioned on the two discs so as to be one in front of another, in an equal pole facing equal pole relationship and projecting from the peripheral surfaces of the discs.

This way the configuration of the two discs of the gear train becomes like that of two toothed wheels or gears meshing with one another. When one of the discs is rotating, particularly the driving disc 1, the other disc is driven into rotation because of the magnetic repulsive forces acting between the poles of the peripheral magnets 10, 20, and the two discs can rotate without any mechanical contact between them, still remaining in phase, i.e. without slipping.

As shown in Fig. 1, the outer edges of the magnets 10, 20 lie on corresponding intersecting circles r1, r2, i.e. the "teeth" formed by the magnets are in mutual interference relationship, and in absence of the magnetic field, the two gears would mechanically mesh with one other.

By adjusting the distance between the two axes 3, 4, and therefore the minimum distance between two facing magnets fitted to different discs, a different level of gear elasticity is achieved, the term elasticity being relative to the possibility of small relative displacements between magnets disposed on different gears, for example when starting a rotation with a large load, but without any physical contact between the facing teeth.

The configurations of the rotating magnetic fields generated by the two discs are such as to create a strong repulsive force between them that prevents the mechanical contact between the discs even when large loads are applied to the gear train. The manufacturing of the discs is quite simple since the recesses are easily milled and allow for a quick and precise positioning of the magnets. The recesses can have different sections from those illustrated, for example they can be arcuate, and in such case magnets of corresponding shape are fitted thereto.

When the two axes are disposed perpendicularly to each other, as schematically illustrated in the embodiment of Fig. 5 by the axes 3A and 4A of the gears 1A and 1B, the preceding indications are to be referred to the respective axis, that is the magnetic axes of the permanent magnets 10A are in a plane perpendicular to the axis of rotation 3A, and the magnetic axes of the permanent magnets 20A are in a plane perpendicular to the axis of rotation 4A.

The magnets are of the type known as rare earth magnets (alloys of rare earth metals), particularly neodymium, and however with very good magnetic characteristics.

Such magnets have a remanence or residual magnetism (Br) higher than 1 T, a coercivity (bHc) comprised between 600 and 1000 kA/m, an intrinsic coercivity (iHc) higher than 900 kA/m and a maximum energy product (BHmax) comprised between 20 and 50 MGOe. Further the magnets maintain their properties at high temperatures, particularly in the range from 80 to 180øC.

The magnets can even be fitted alternately between the two discs, and moreover the magnets can be fitted at non-adjacent locations, but equally spaced from one other.

Although the invention has been illustrated with reference to preferred embodiments, the same is generally susceptible of other applications and modifications that fall within the invention scope as will be evident to the skilled of the art.

## Claims

1. A magnetic gear train comprising:
a first member (1, 1A) rotatable about a first axis (3, 3A), provided with a first plurality of magnets (10, 10A) circumferentially spaced along its peripheral surface and projecting therefrom;
a second member (2, 2A) rotatable about a second axis (4, 4A), provided with a second plurality of magnets (20, 20A) circumferentially spaced along its peripheral surface and projecting therefrom;
characterized in that the magnetic axes (S-N) of said first permanent magnets (10, 10A) are in a plane perpendicular to the axis of rotation (3, 3A) of the corresponding rotatable member (1, 1A), and that the magnetic axes (S-N) of said second permanent magnets (20, 20A) are in a plane perpendicular to the axis of rotation (4, 4A) of the corresponding rotatable member (2, 2A), said magnetic axes being further inclined to the radial direction (R) of the corresponding rotatable member (1, 1A, 2, 2A).

2. A magnetic gear train as claimed in claim 1, characterized in that said two axes (3, 4) are parallel to one another.

3. A magnetic gear train as claimed in claims 1 or 2, characterized in that said rotatable members (1, 2) comprise two discs of equal diameter.

4. A magnetic gear train as claimed in the preceding claims, characterized in that the outer edges of said magnets (10, 20) lie on two intersecting circles (r1, r2).

5. A magnetic gear train as claimed in the preceding claims, characterized in that the magnetic axes of the said permanent magnets (10, 20) are inclined of equal angles α to the radial direction (R) of the corresponding rotatable member (1, 2).

6. A magnetic gear train as claimed in claim 5, characterized in that said angle α is of 45 degrees.

7. A magnetic gear train as claimed in the preceding claims, characterized in that said magnets (10, 20) are fitted in recesses (11, 21) formed in the peripheral surfaces of the corresponding members (1, 2), and said magnets (10, 20) have the shape of a parallelepiped with the magnetic axis parallel to two opposed faces of said parallelepiped, and inclined to the radial direction (R) of the corresponding rotatable member (1, 2).

8. A magnetic gear train as claimed in the preceding claims, characterized in that said recesses (11, 21) are formed with two inclined walls (12, 14).

9. A magnetic gear train as claimed in the preceding claims, characterized in that said magnets have a remanence (Br) higher than 1 T, a coercivity (bHc) comprised between 600 and 1000 kA/m, an intrinsic coercivity (iHc) higher than 900 kA/m and a maximum energy product (BHmax) comprised between 20 and 50 MGOe, and maintain their properties at high temperatures.

10. A magnetic gear train as claimed in the preceding claims, characterized in that said magnets (10, 20) have a width larger than the thickness of the disc (1, 2) on which they are mounted.
